# EUROPÄISCHE PATENTSCHRIFT

(11) **EP 3 115 414 B1**
(45) Veröffentlichungstag und Bekanntmachung des Hinweises auf die Patenterteilung: **12.12.2018**
(21) Anmeldenummer: 16001502.0
(22) Anmeldetag: 06.07.2016
(51) Int. Cl.: C08L 33/12, C08L 35/06

(54) **BAUELEMENT, VERFAHREN ZU DESSEN HERSTELLUNG, UND SPRITZFÄHIGES MATERIAL**
COMPONENT, METHOD FOR PRODUCING THE SAME, AND SPRAY MATERIAL
COMPOSANT, SON PROCEDE DE FABRICATION ET MATERIAU APPLICABLE PAR PULVERISATION

(30) Priorität: 08.07.2015 DE 102015111052
(43) Veröffentlichungstag der Anmeldung: 11.01.2017
(73) Patentinhaber: PARAT Beteiligungs GmbH, 94089 Neureichenau (DE)
(72) Erfinder: Kornexl, Christian, 94133 Röhmbach (DE); Ehm, Wolfgang, 94124 Büchlberg (DE)
(74) Vertreter: Roche, von Westernhagen & Ehresmann

(56) Entgegenhaltungen:
- DE-A1- 10 064 520
- DE-A1-102005 038 754
- US-A1- 2004 191 480
- US-A1- 2011 287 203

## Beschreibung

Die Erfindung betrifft zunächst ein Bauteil nach dem Oberbegriff des Anspruches 1.

Derartige Bauteile, insbesondere Fahrzeugteile, wie zum Beispiel Verkleidungs-, oder Karosserieteile für landwirtschaftliche Fahrzeuge, zum Beispiel für Traktoren, oder für Baustellenfahrzeuge, wie zum Beispiel Bagger oder Mini-Bagger, werden von der Anmelderin seit geraumer Zeit entwickelt und vertrieben.

Die in Rede stehenden Bauelemente des Oberbegriffes des Anspruches 1 sind in der Regel einer Beaufschlagung durch Wasser oder Wasserdampf, nämlich insbesondere in Form von Regen, oder kondensierender Luftfeuchtigkeit, aber häufig auch Schmutzpartikeln ausgesetzt.

Hiervon ausgehend stellt sich der Erfindung die Aufgabe, das Bauelement der gattungsgemäßen Art derartig weiter zu entwickeln, dass der Reinigungsaufwand reduziert werden kann.

Die Erfindung löst diese Aufgabe mit den Merkmalen des Anspruches 1, insbesondere mit denen des Kennzeichenteils, und ist demgemäß dadurch gekennzeichnet, dass in der Kunststoffschicht, zur Reduktion der Oberflächenspannung an der Oberfläche, als Additiv ein Reservoir an migrationsfähigen, unpolaren oder überwiegend unpolaren Molekülen angeordnet ist.

Das Prinzip der Erfindung besteht im wesentlichen darin, unmittelbar in der PMMA-Schicht oder in der ASA-Schicht oder in einer TPU-Schicht ein Depot oder ein Reservoir migrationsfähiger, unpolarer oder überwiegend unpolarer Moleküle anzuordnen. Es kann sich dabei beispielsweise um Moleküle handeln, die aus der Gruppe Silikone, Wachse oder Fluor-Verbindungen stammen.

Die Moleküle werden in die Kunststoffschicht unmittelbar eingebracht, beispielsweise in eine Schmelze aus der Kunststoffschicht eingebracht, und darin verteilt, insbesondere homogen verteilt.

Die Moleküle sind migrationsfähig ausgebildet. Dies bedeutet, dass sich die unpolaren Moleküle innerhalb der Kunststoffschicht - langsam, also innerhalb großer Zeiträume - bewegen können. Die Moleküle können im Laufe der Lebensdauer des Bauelementes zu der Oberfläche hin wandern. Zumindest ein wesentlicher Teil der als Additiv der Kunststoffschicht zugesetzten, migrationsfähigen, unpolaren oder überwiegend unpolaren Moleküle kann im Laufe eines Zeitraums, der der üblicherweise zu erwartenden Lebensdauer des Bauelementes, oder eines Teils dessen, entspricht, zu der Oberfläche hin wandern.

Oberflächen herkömmlicher Bauelemente aus PMMA oder ASA weisen eine Oberflächenspannung auf, die etwa bei 43,28 mN/m liegt.

Dies bedeutet, dass sich Wassertropfen an einer PMMA-Oberfläche oder an einer ASA-Oberfläche in Folge der bestehenden, auftretenden Adhäsionskräfte festhalten können. Wassertropfen bleiben an der Oberfläche haften.

Die Erfindung schlägt nun vor, durch Einbettung von unpolaren, oder überwiegend unpolaren migrationsfähigen Molekülen in die Kunststoffschicht, die zu der Oberfläche hin migrieren können, die Oberflächenspannung an der Oberfläche erheblich zu reduzieren, insbesondere auf einen Wert von weniger als 40 mN/m zu reduzieren. Hierdurch kann die Oberfläche - dauerhaft, insbesondere über die zu erwartende Lebensdauer des Bauelementes - hydrophob oder - bezogen auf reines PMMA bzw. reines ASA - weniger hydrophil eingestellt werden.

Wassermoleküle können bei einem erfindungsgemäßen Bauelement nicht mehr gut an der Oberfläche haften. Es kommt zum Auftreten des als Lotus-Effekt bezeichneten Effektes. Durch das Abperlen des Wassers können Schmutzpartikel mit den abperlenden Wassertropfen mitgerissen werden. Hierdurch wird die Oberfläche selbstreinigend oder nahezu selbstreinigend ausgebildet. Zumindest ist die Oberfläche eines erfindungsgemäß ausgestalteten Bauelementes leichter zu reinigen, als eine reine PMMA-Oberfläche oder eine reine ASA-Oberfläche.

Bei anderen Anwendungsfällen - zum Beispiel Glasoberflächen - sind bereits eine Vielzahl von Materialien bekannt, die die Oberflächenspannung reduzieren können. Die Erfindung erkennt, dass derartige Materialien unmittelbar, als Additiv, in eine Kunststoffschicht eingearbeitet werden können.

Die exakte Wahl der Moleküle und deren Konzentration hängt von den gestellten Anforderungen ab.

Als unpolare Moleküle im Sinne der vorliegenden Patentanmeldung werden solche Moleküle angesehen, die kein permanentes Dipolmoment besitzen. Man nennt diese Moleküle auch a-polare Moleküle.

Als überwiegend unpolare Moleküle im Sinne der vorliegenden Patentanmeldung werden solche Moleküle angesehen, die ein allenfalls nur geringes Dipolmoment aufweisen. Es handelt sich dabei insbesondere um Moleküle, die weniger polar ausgebildet sind, als die Moleküle der Matrix. Im Falle einer als PMMA-Schicht ausgebildeten Kunststoffschicht sind die überwiegend unpolar ausgebildeten Moleküle also weniger polar ausgebildet, als die PMMA-Moleküle. Anders ausgedrückt, weisen die überwiegend unpolaren Moleküle ein geringeres Dipolmoment auf, als die Moleküle der Matrix der Kunststoffschicht.

Als mögliche, geeignete Materialien kommen zum Beispiel die folgenden Materialien in Betracht:
BYK Silclean 3720 (unter diesem Handelsnamen kommerziell erhältlich bei der BYK-Chemie GmbH in Wesel), Tego Phobe 1670 (unter diesem Handelsnamen kommerziell erhältlich bei der Evonik Industries AG in Essen; Anmerkung: es handelt sich hierbei um eine Emulsion eines modifizierten Polysiloxanharzes), Tego Protect 5001 (unter diesem Handelsnamen ebenfalls kommerziell erhältlich bei der Evonik Industries AG mit Sitz in Essen; Anmerkung: es handelt sich hierbei um ein hydroxyfunktionelles Silikonpolyacrylat), Ceraflour 994 (unter diesem Handelsnamen erhältlich bei der BYK-Chemie GmbH in Wesel; Anmerkung: es handelt sich um eine Emulsion eines aminofunktionellen Polysiloxans), Ceraflour 998 (unter diesem Handelsnamen erhältlich bei der BYK-Chemie GmbH in Wesel), Tegomer P121 (unter diesem Handelsnamen ebenfalls kommerziell erhältlich bei der Evonik Industries AG mit Sitz in Essen), Tegomer E525 (unter diesem Handelsnamen kommerziell erhältlich bei der Evonik Industries AG mit Sitz in Essen), Stearinsäure, FEP 6322Z (unter diesem Handelsnamen erhältlich bei der 3M Advanced Materials Division der 3M Deutschland GmbH mit Sitz in Neuss), Deuteron WS (unter diesem Handelsnamen erhältlich bei der Deuteron GmbH mit Sitz in Achim), Tegomer H-Si 6440P, Byk Silclean 3720, Tego Phobe 1401 (unter diesem Handelsnamen ebenfalls kommerziell erhältlich bei der Evonik Industries AG mit Sitz in Essen; Anmerkung: es handelt sich um eine Emulsion eines aminofunktionellen Polysiloxans), Tego Phobe 1500N (unter diesem Handelsnamen ebenfalls kommerziell erhältlich bei der Evonik Industries AG mit Sitz in Essen; Anmerkung: es handelt sich um eine Emulsion eines aminofunktionellen Polysiloxans), Evonik H-SI 6440P (unter diesem Handelsnamen ebenfalls kommerziell erhältlich bei der Evonik Industries AG mit Sitz in Essen), Palmitinsäure, Dyneon FEP 6322Z10 (unter diesem Handelsnamen erhältlich bei der 3M Advanced Materials Division der 3M Deutschland GmbH mit Sitz in Neuss), Dyneon PFA 6502 TZ (unter diesem Handelsnamen erhältlich bei der 3M Advanced Materials Division der 3M Deutschland GmbH mit Sitz in Neuss), Proline PTFE-Pulver (unter diesem Handelsnamen erhältlich bei der Liqui Moly GmbH in Ulm), PFA 6502 TZ (unter diesem Handelsnamen erhältlich bei der 3M Advanced Materials Division der 3M Deutschland GmbH mit Sitz in Neuss), PTFE (Handelsname Teflon der Firma Dupont), 3M FEP 6322Z (unter diesem Handelsnamen erhältlich bei der 3M Advanced Materials Division der 3M Deutschland GmbH mit Sitz in Neuss), Perfluroctansäure.

Auch eine Vielzahl anderer geeigneter Materialien aus der Gruppe der Silikone, Wachse, oder Fluor-Verbindungen kommt in Betracht.

Die Konzentration der Moleküle in der Kunststoffschicht kann gemäß der Erfindung zwischen 0,1 und 10%, vorzugsweise zwischen 0,5 und 7,5% (Angaben jeweils in Gewichtsprozent) betragen.

Im folgenden soll eine Zusammenschau des Standes der Technik erfolgen:
Es sind verschiedene Vorgehensweisen bekannt, um eine leicht zu reinigende oder eine selbstreinigende Oberfläche zu generieren. Hierzu zählt der Einsatz von:
a) hydrophoben und oleophoben Oberflächen (bekannt unter dem Stichwort Tefloneffekt)
b) strukturierten, hydrophoben Oberflächen (bekannt unter dem Stichwort Lotus-Effekt)
c) superhydrophilen, katalytisch wirkenden Oberflächen (bekannt unter dem Stichwort photokatalytischer Effekt)

Damit Schmutz an einer Oberfläche haften kann, muss dieser mit der Oberfläche Adhäsionskräfte aufbauen. Diese Adhäsionskräfte sind umso geringer, je geringer die freie Oberflächenenergie oder Oberflächenspannung der Oberfläche ist. Materialien, wie Teflon oder Silikon, zeigen eine geringe Oberflächenenergie. Sowohl der polare als auch der disperse Anteil der Oberflächenenergie dieser Kunststoffe sind sehr gering, so dass deren Oberflächen sowohl hydrophobes als auch oleophobes Verhalten zeigen. Das bedeutet, dass sowohl z.B. wässrige Verunreinigungen wie auch ölartige Verschmutzungen (auch Ruß etc.) von der Oberfläche abgewiesen werden.

Im Rahmen dieser Patentanmeldung wird für die hier interessierenden Bauelemente der Begriff "freie Oberflächenenergie" und der Begriff "Oberflächenspannung" - wie dies bei Flüssigkeiten üblich ist - als Synonym verwendet.

Untersuchungen von Prof. Dr. Barthlott an Pflanzenoberflächen haben gezeigt, dass die Blätter vieler Pflanzen (z.B. Lotus, Maiglöckchen, Kohl, Brunnenkresse) einen selbstreinigenden Effekt zeigen. Nähere Untersuchungen zeigen, dass durch das Herausdrücken kleiner Wachskristalle die Oberflächen sowohl hydrophob eingestellt als auch strukturiert wird. Die Strukturelemente sind nur wenige Nanometer voneinander entfernt, so dass sich auf der Oberfläche bildende Wassertropfen nur auf den Spitzen dieser Strukturen zu liegen kommen. Dadurch werden die Adhäsionskräfte minimiert und der Wassertropfen rollt bei einem sehr kleinen Abrollwinkel vom Blatt ab und nimmt den Schmutz mit (Lotuseffekt).

Einem dem Lotuseffekt gegenteiligen Effekt nutzen photokatalytische Schichten aus. Schichten aus halbleitenden Oxiden (z.B. Titandioxid) erzeugen bei UV-Bestrahlung mit Luftsauerstoff und -feuchtigkeit Radikale, die die Oberfläche superhydrophil einstellt. Wasser bildet auf solchen Oberflächen keine Tropfen, sondern einen Film, der hinter Verschmutzungen kriechen und damit diese wegspülen kann. Darüber hinaus sind diese Radikale sehr starke Oxidationsmittel. Organische Verunreinigungen können in Kontakt mit diesen Radikalen oxidiert werden. Dadurch werden die Adhäsionskräfte dieser Verunreinigungen mit der Oberfläche zerstört und die Verschmutzung kann mit dem Wasserfilm leicht abgewaschen werden.

Darüber hinaus gibt es weitere Forschungsansätze, um ein Anhaften von Verunreinigungen zu vermeiden. Zu erwähnen sind die Arbeiten am Massachusetts Institute of Technology (MIT), bei denen Polymeroberflächen mit einem Gel (LiquiGlide, Polyethylmethacrylat/Fluordecyl-Polyhedrales oligomeres Silsesquioxan (PEMA/POSS)) beschichtet sind. Das Gel wirkt als eine Art Verlustgleitschicht, die eine Adhäsion verhindert.

Ein biomimetischer Ansatz wird an der Universität Harvard verfolgt. Hier wird die Fangart der fleischfressenden Kannenpflanze (Nephentes) imitiert. Das Beutetier kann sich an der glatten, feuchten Kannenoberfläche nicht halten und fällt in den Verdauungssaft der Pflanze. Die Lösung von Harvard besteht aus einer rauen Oberfläche, die mit einer oleophoben Flüssigkeit getränkt ist (SLIPS: self-healing, slippery liquid-infused porous surface(s)).

Im Stand der Technik sind insbesondere Verfahren bekannt, durch Beschichtung die gewünschten Funktionalitäten zu erzeugen. Zu erwähnen sind Beschichtungen
a) mit Sol-Gel-Systemen
b) durch chemische Dampfphasenabscheidung (CVD)
c) durch physikalische Dampfphasenabscheidung (PVD)
d) durch Plasmapolymerisation
e) durch Strukturierung der Polymeroberfläche
f) mit Blockcopolymeren
g) mit Fluorverbindungen

Die bekannten Maßnahmen, die bislang angedacht worden sind, um überhaupt selbstreinigende Oberflächen oder auf besonders leichte Weise zu reinigende Oberflächen zu schaffen, befassen sich also grundsätzlich mit der Beschichtung von Bauelementen, also mit der Aufbringung einer gesonderten Schicht auf ein bereits vorhandenes Bauteil.

Aus der DE 10 2005 038754 A1, der DE 10064520 A1, der US 2004/191480 A1 und der US 2011/287203 A1 sind jeweils Verfahren bekannt, die Oberfläche eines Bauelementes mit einer besonderen Oberflächenstruktur zu versehen. Keine der Druckschriften gibt dem Fachmann den Hinweis, die Oberflächenspannung der Oberfläche der Kunststoffschicht zu reduzieren, und hierzu ein Reservoir mit migrationsfähigen, unpolaren oder überwiegend unpolaren Molekülen vorzusehen.

Die Erfindung geht demgegenüber einen gänzlich anderen Weg:
Gemäß der Erfindung wird ein Reservoir geeigneter Moleküle unmittelbar in die Kunststoffschicht eingebracht. Sie bildet dort ein Reservoir oder Depot, also einen Vorrat, aus. Die Moleküle sind migrationsfähig, und können - bei Betrachtung sehr langer Zeiträume - an die Oberfläche des Bauteils gelangen, um dort dafür zu sorgen, dass die Oberfläche hydrophob eingestellt wird.

Bei der Wahl geeigneter migrationsfähiger, unpolarer Moleküle ist zu beachten, dass die Migrationsneigung eines solchen Moleküls sowohl von der Polarität bzw. Oberfläche des Moleküls, als auch von dessen Größe abhängt. Schließlich kommt es in besonderem Maße auf die Konzentration des Moleküls in der Kunststoffschicht an.

Gemäß der erfindungsgemäßen Lehre kann ein Prozess der Selbstorganisation von migrierenden Additiven an die Oberfläche des Bauelementes für eine erleichterte Reinigbarkeit der Oberfläche sorgen. Von der Erfindung ist umfasst, dass an der Oberfläche anhaftende Schmutzpartikel aufgrund der erheblich reduzierten Adhäsionskräfte bei einem leichten Benetzen oder Beaufschlagen der Oberfläche mit Wasser gelöst und fortgespült werden können. Es genügt, beispielsweise ein als Traktorhaube eines Traktors ausgebildetes erfindungsgemäßes Bauelement, welches stark verschmutzt ist, mit Wasser, zum Beispiel mittels eines Wasserschlauches, abzuspritzen, und hierdurch eine sehr saubere Oberfläche zu erhalten.

Durch die Einbringung migrationsfähiger Moleküle, unmittelbar in die Kunststoffschicht hinein, und durch die Bereitstellung eines Reservoirs an Molekülen, kann darüber hinaus über sehr große Zeitdauern eine leichte Reinigbarkeit der Oberfläche gewährleistet werden.

Die migrationsfähigen, unpolaren Moleküle sind insbesondere von niedermolekularen, oligomeren oder polymeren Additiven bereitgestellt.

Die Erfindung schlägt die Bereitstellung einer dauerhaft leicht zu reinigenden oder dauerhaft selbstreinigend ausgebildeten Oberfläche durch Anordnung von migrationsfähigen, unpolaren oder überwiegend unpolaren Molekülen vor, die durch kontinuierliches Heranwandern an die Oberfläche des Bauelementes, dieses hydrophob, das heißt, wasserabweisend, und damit in Konsequenz auch schmutzabweisend, ausgestalten.

Das erfindungsgemäße Bauelement ist beispielsweise ein Caravan-Bauelement, also zum Beispiel ein Karosserieteil oder ein Verkleidungsteil eines Caravan oder eines Caravan-Anhängers, eines Mobilheims, eines Wohnmobils, oder eines anderen Camping-Fahrzeuges.

Das erfindungsgemäße Bauelement kann auch als ein Karosserieteil oder Verkleidungsteil für ein Fahrzeug, wie Automobil, Nutzfahrzeug, landwirtschaftliches Fahrzeug, zum Beispiel als eine Traktorhaube, oder für ein Baufahrzeug, oder eine Baumaschine, zum Beispiel als Verkleidungsteil für eine Baumaschine, ausgebildet sein.

Das erfindungsgemäße Bauelement kann aber beispielsweise auch als ein Sanitärausstattungsteil, also als ein Bauelement, das in einem Badezimmer Anwendung findet, oder in einem Schwimmbadbereich, oder in einem Saunabereich, ausgebildet sein. Beispielsweise kann die Erfindung bei als Duschkabinentüren ausgebildeten Bauelementen zum Einsatz kommen.

Gemäß einer besonders vorteilhaften Ausgestaltung der Erfindung ist die Oberfläche als Hochglanzschicht ausgebildet. Dies ermöglicht in vorteilhafter Weise zum Beispiel einen erfindungsgemäßen Einsatz als Verkleidungsteil für Fahrzeuge.

Gemäß einer vorteilhaften Ausgestaltung der Erfindung weist das Bauelement einen Schichtverbund aus mehreren Schichten aus unterschiedlichen Kunststoffen auf. Beispielsweise kann vorgesehen sein, dass das Bauelement, zum Beispiel ein Karosserieteil, oder ein Verkleidungsteil, eine dünne PMMA-Schicht von beispielsweise 0,5 mm +-0,2 mm Wandstärke aufweist. Diese Schicht kann mit wenigstens einer weiteren Kunststoffschicht, insbesondere aus einen Kunststoff, zum Beispiel aus ABS, PC (Polycarbonat), PA (Polyamid), etc. verbunden sein, die zum Beispiel eine Wandstärke von mehreren mm aufweist. Derartige Schichtverbund-Konstruktionen aus mehreren Kunststoffschichten kommen beispielsweise bei Verkleidungsteilen für Fahrzeuge in Betracht.

Insgesamt erstreckt sich die Erfindung auf sämtliche Anwendungsbereiche, bei denen ein Bauelement eine, eine Oberfläche bereitstellende Deckschicht aus PMMA oder aus ASA aufweist.

Die Erfindung erkennt des weiteren, dass jede Kunststoffschicht aus PMMA aufgrund der vorhandenen PMMA-Polymere per se hydrophile Eigenschaften an der Oberfläche aufweist. Die PMMA-Polymere sind polar ausgebildet.

Mit der hydrophilen Ausgestaltung einer Oberfläche eines herkömmlichen PMMA-Bauelementes geht aber - vorteilhaft - einher, dass dieses Bauteil kratzfest und UV-beständig ausgebildet sein kann.

Die Erfindung erkennt, dass sich unpolar ausgestaltete, migrationsfähige Moleküle innerhalb einer insbesondere aus PMMA bestehenden Kunststoffschicht bewegen können. Hierfür sorgen Molekülbewegungen im mikroskopischen Maßstab. Die Migrationsbewegungen bedürfen keiner Energiezufuhr, und keiner Steuerung oder Kontrolle. Es ist dem Fachmann aber ersichtlich, dass für den Fall, dass die erfindungsgemäßen Bauteile an der Oberfläche Tageslicht oder Wärmeeinwirkung ausgesetzt sind, diese äußeren Rahmenbedingungen der Migrationsprozesse der unpolaren Moleküle beeinflussen.

Sofern im Rahmen dieser Patentanmeldung von einer PMMA-Schicht bzw. einer ASA-Schicht gesprochen wird, soll dies stellvertretend für sämtliche Ausführungsbeispiele gelten, bei denen eine UV-beständige, als Deckschicht ausgebildete Kunststoffschicht aus einem geeigneten Kunststoff Anwendung findet.

Gemäß der Erfindung wird erstmalig ein Bauelement mit einer Kunststoffschicht aus PMMA oder ASA bereitgestellt, bei dem eine Oberflächenspannung von weniger als 40 mN/m erreicht wird.

Eine Vielzahl von Versuchen - auf die später noch eingegangen wird - hat Ergebnisse gezeigt, bei denen über große Zeiträume von über sechs Monaten erhebliche Reduktionen der Oberflächenspannung, insbesondere auf weniger als 30 mN/m, sogar auf Werte von 26 unter Nm/m, erreicht worden sind und langfristig aufrechterhalten werden konnten.

Gemäß einer vorteilhaften Ausgestaltung der Erfindung sind die Moleküle amphiphil ausgebildet. Hierdurch besteht die Möglichkeit, eine Oberfläche für die Kunststoffschicht mit einer besonders leicht zu reinigenden Oberfläche bereit zu stellen. Amphiphile Moleküle verhaften sich in der Oberfläche besser. Somit ist ein Lösen des Additivs von der Oberfläche erschwert.

Gemäß einer weiteren vorteilhaften Ausgestaltung der Erfindung stammen die Moleküle aus der Gruppe der folgenden Stoffe oder weisen wenigstens einen Stoff aus der Gruppe der folgenden Stoffe auf:
a) Silikon
b) Wachs
c) Fluor-Verbindungen

Diese Stoffgruppen ermöglichen eine Bereitstellung von für den Einsatz gemäß der erfindungsgemäßen Lehre besonders gut geeigneter, migrationsfähiger, unpolarer Moleküle.

Gemäß einer weiteren vorteilhaften Ausgestaltung der Erfindung ist das Bauelement flächenhaft ausgebildet. Dies bedeutet, dass das Bauelement eine Erstreckung entlang einer X-Richtung und einer dazu senkrecht stehenden Y-Richtung aufweist, die erheblich größer ist, als eine Erstreckung in einer quer dazu stehenden Z-Richtung. Anders ausgedrückt, ist das Bauelement im wesentlichen dünnwandig ausgebildet.

Gemäß einer weiteren vorteilhaften Ausgestaltung der Erfindung ist das Bauelement von einer Folie oder einer Platte bereitgestellt. Als Folie oder Platte wird ein im wesentlichen entlang einer Ebene ausgerichtetes, dünnwandiges Bauelement bezeichnet, welches durch Verformung, zum Beispiel infolge eines Tiefziehvorgangs, in eine aus der Ebene herausragende Raumform überführt werden kann. Die Folie ist tiefziehbar ausgestaltet, und kann mit einem Tiefziehwerkzeug tiefgezogen werden.

Gemäß einer weiteren vorteilhaften Ausgestaltung der Erfindung ist die Folie oder die Platte von einer Polyurethan-Schaummasse hinterschäumt. Die Polyurethan-Schaummasse kann insbesondere auch Verstärkungsfasern, insbesondere Glas-, Carbon-, Aramid- oder Basalt-Fasern, aufweisen.

Es besteht gemäß der Erfindung auch die Möglichkeit, die Folie oder Platte mit einer aufschäumbaren, aushärtbaren Vergussmasse aus einem anderen Material zu hinterschäumen.

Durch diese Maßnahme werden Leichtbauteile möglich, die eine selbstreinigende oder leicht zu reinigende Oberfläche aufweisen, und diese über sehr lange Zeiträume bewahren und/oder aufrechterhalten können.

Gemäß einer alternativen Ausgestaltung der Erfindung ist das Bauelement als Spritzgussteil ausgebildet. Diese Ausgestaltung der Erfindung ermöglicht es, dem Bauelement nahezu jede erdenkliche Raumform zu geben.

Gemäß einer weiteren vorteilhaften Ausgestaltung der Erfindung ist das Additiv in eine Schmelze der Kunststoffschicht aus PMMA oder aus ASA eingearbeitet worden. Die Einarbeitung kann beispielsweise mittels eines Extrusionsvorganges vorgenommen worden sein. Die Einarbeitung in die Schmelze ermöglicht bereits per se eine homogene Verteilung der Moleküle in der Kunststoffschicht. Dies ermöglicht eine Gewährleistung einer Reduktion der Oberflächenspannung auf der Oberfläche des Bauelementes über einen sehr langen Zeitraum.

Alternativ besteht die Möglichkeit einer in-situ-Zugabe des Additivs bei einem Polymerisations-Vorgang der Kunststoffschicht.

Gemäß einer besonders vorteilhaften Ausgestaltung der Erfindung ist infolge der Ausbildung eines Reservoirs an Molekülen die Oberflächenspannung an der Oberfläche auf einen Wert von kleiner als 40 mN/m reduziert. Weiter vorteilhafterweise ist die Oberflächenspannung auf einen Wert kleiner als 35 mN/m, weiter insbesondere auf kleiner als 30 mN/m, weiter insbesondere auf einen Wert kleiner als 25 mN/m, weiter insbesondere auf einen Wert kleiner als 20 mN/m, reduziert.

Hierdurch gelingt die Ausbildung einer sehr hydrophob ausgelegten Oberfläche mit der Folge einer extrem leichten Reinigbarkeit.

Gemäß einer vorteilhaften Ausgestaltung der Erfindung ist die Oberfläche als Hochglanz-Schicht ausgebildet.

Gemäß einem zweiten Aspekt bezieht sich die Erfindung auf ein Verfahren nach Anspruch 13.

Ausgehend von einem Verfahren zur Herstellung eines Bauelements herkömmlicher Art, das eine Kunststoffschicht aus PMMA aufweist, liegt der Erfindung die Aufgabe zugrunde, das bekannte Verfahren derartig weiter zu bilden, dass die Oberfläche des Bauelementes leicht zu reinigend ausgestaltet ist, oder selbstreinigend ausgestaltet ist.

Die Erfindung löst diese Aufgabe mit den Merkmalen des Anspruches 13.

Bezüglich der Vorteile der Erfindung in Anspruch 13 wird auf die obigen, zu den vorherigen Ansprüchen beschriebenen Vorteile und Begrifflichkeiten und Merkmale verwiesen.

Die Erfindung bezieht sich gemäß einem weiteren Aspekt auf ein spritzfähiges Material nach Anspruch 14.

Der Erfindung liegt die Aufgabe zugrunde, ein spritzfähiges Material bereitzustellen, welches im verwendeten Zustand, insbesondere nach Aufbringung auf ein mit dem spritzfähigen Material zu beschichtenden Objekt, zum Beispiel durch Rollen oder Streichen oder Sprühen oder Spritzen, eine Oberfläche bereitstellt, die schmutzabweisend oder leicht zu reinigen ist.

Die Erfindung löst diese Aufgabe mit den Merkmalen des Anspruches 14.

Bezüglich der bei dem spritzfähigen Material nach Anspruch 14 einzusetzenden Additive und Moleküle wird zur Vermeidung von Wiederholungen auf die obigen, und auch auf die nachfolgenden Ausführungen zu den beschriebenen Bauelementen und Verfahren verwiesen.

Die Erfindung bezieht sich gemäß einem weiteren Aspekt auf ein Bauelement nach Anspruch 15.

Bezüglich der Vorteile dieses Bauelementes nach Anspruch 15 und der Bedeutung der Merkmale des Anspruches 15 wird auf die vorherigen und auf die nachfolgenden Ausführungen zur Vermeidung von Wiederholungen verwiesen.

Weitere Vorteile der Erfindung ergeben sich aus den nicht zitierten Unteransprüchen sowie aus der nachfolgenden Beschreibung der in den Zeichnungen dargestellten Ausführungsbeispiele. Darin zeigen:
- Fig. 1: ein erstes Ausführungsbeispiel eines erfindungsgemäßen Bauelements in Form eines als Heckschürze eines Caravans ausgebildeten Bauelementes,
- Fig. 2: zur Veranschaulichung eines Schichtaufbaus einer Heckschürze des Standes der Technik eine Schnittdarstellung eines Bereiches einer herkömmlichen Heckschürze, etwa entlang Schnittlinie II-II in Fig. 1,
- Fig. 3: in einer Darstellung gemäß Fig. 2 eine teilgeschnittene schematische Ansicht eines Bereiches der Heckschürze nach Fig. 1 gemäß einer erfindungsgemäßen Ausführungsform,
- Fig. 4: ein weiteres Ausführungsbeispiel eines erfindungsgemäßen Schichtaufbaus in einer Darstellung gemäß Fig. 3, bei der das Bauelement nur eine Schicht aus PMMA oder ASA aufweist,
- Fig. 5: eine vergrößerte Detaildarstellung eines Bereiches des Ausführungsbeispiels der Fig. 3 gemäß Teilkreis V in Fig. 3, und
- Fig. 6: ein weiteres Ausführungsbeispiel eines erfindungsgemäßen Bauelementes in einer Darstellung gemäß Fig. 3, wobei der Schichtverbund innenseitig, also auf seiner der Oberfläche abgewandten Seite, mit einer faserverstärkten Polyurethan-Vergussmasse hinterschäumt und verstärkt ist.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

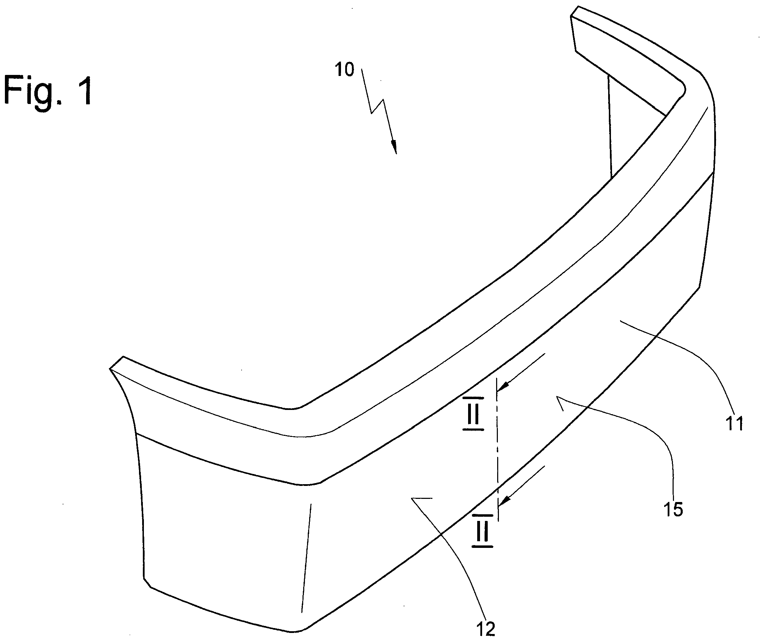

Fig. 1 zeigt in einer schematischen, perspektivischen Ansicht ein erstes Ausführungsbeispiel eines erfindungsgemäßen Bauelementes. Dieses ist als Heckschürze eines Caravans oder Caravan-Anhängers ausgebildet. Das Ausführungsbeispiel der Fig. 1 soll repräsentativ für eine Vielzahl möglicher Anwendungen der Erfindung im Sinne eines Fahrzeug-Teils, insbesondere eines Fahrzeug-Karosserie-Teils, oder eines Fahrzeug-Verkleidungs-Teils stehen.

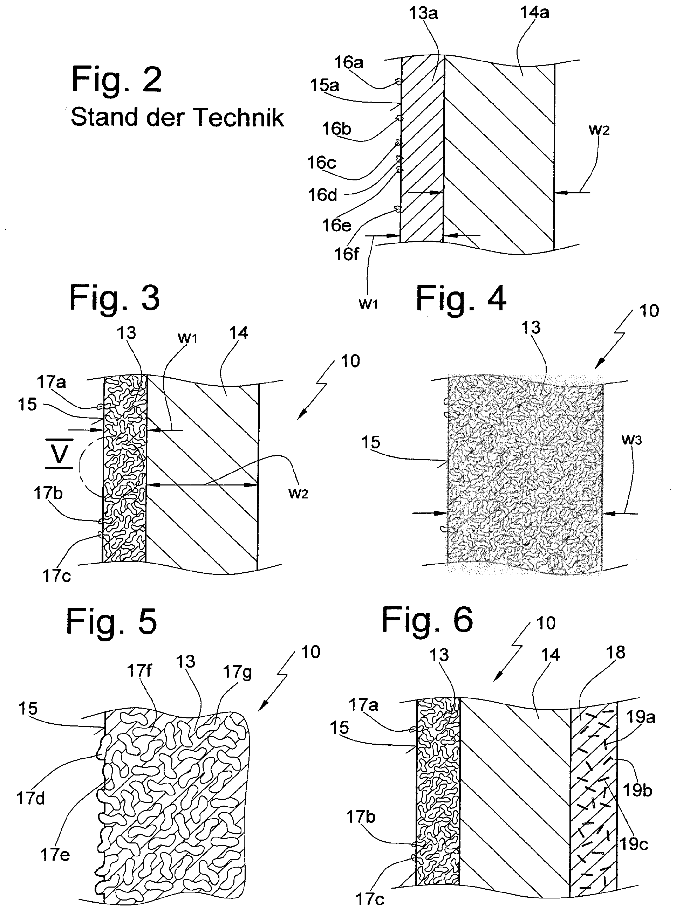

Ausweislich der Fig. 2 soll unter Bezugnahme auf die in Fig. 1 mit II-II bezeichnete Schnittlinie, der Schichtaufbau eines Bauelementes des Standes der Technik erläutert werden:
Fig. 2 zeigt - lediglich schematisch, und insbesondere nicht maßstäblich -, dass das herkömmliche Bauelement aus einer PMMA-Schicht 13a mit einer geringeren Wandstärke W1 und einer zweiten Kunststoffschicht 14 mit einer größeren Wandstärke W2 besteht. Die PMMA-Schicht 13a kann eine Wandstärke von beispielsweise 0,5 +/- 0,3 mm aufweisen. Die zweite Kunststoffschicht 14a kann beispielsweise aus ABS bestehen, und eine Wandstärke W2 von bis zu mehreren Millimetern aufweisen.

Das als Heckschürze 11 gemäß Fig. 1 ausgebildete Bauelement 10 weist eine nach außen gerichtete Oberfläche 12 auf. Diese ist - wie bei Fahrzeugen, die im Außenraum bewegt werden, völlig selbstverständlich - regelmäßig oder unregelmäßig einer Beanspruchung und Beaufschlagung durch Wasser, Wasserdampf, und Schmutz ausgesetzt.

Bei einem Schichtaufbau gemäß Fig. 2 des Standes der Technik, bei der die Oberfläche 15a von einer Grenzfläche der PMMA-Schicht 13a bereitgestellt ist, können Schmutzpartikel 16a, 16b, 16c, 16d, 16e, 16f an der Oberfläche 15a anhaften. Grund dafür ist die hydrophile Ausgestaltung der Oberfläche 15a. Die Oberfläche 15 einer PMMA-Kunststoffschicht 13a ist zwingend hydrophil ausgebildet, da die in der PMMA-Kunststoffschicht 13a enthaltenen Moleküle polar sind.

Gemäß der Erfindung soll anhand des Ausführungsbeispiels der Fig. 3 erläutert werden, dass in der PMMA-Schicht 13 gemäß der Erfindung ein Reservoir von migrationsfähigen, unpolaren oder überwiegend unpolaren Molekülen 17a, 17b, 17c angeordnet ist. Die Form, Größe, Geometrie und Positionierung und die Zahl der bei den Ausführungsbeispielen der Fig. 3 bis 6 dargestellten Moleküle soll lediglich schematisch zu verstehen sein. Auch ist dem Fachmann deutlich, dass der Übersichtlichkeit halber jeweils nur einige der als Additive in die PMMA-Schicht 13 eingebrachten Moleküle, nämlich beispielsweise bei dem Ausführungsbeispiel der Fig. 3 die Moleküle 17a, 17b, 17c, mit Bezugszeichen bezeichnet sind.

Fig. 3 verdeutlicht, dass die Moleküle 17a, 17b, 17c entlang dem Volumen der PMMA-Schicht 13 homogen, oder im wesentlichen homogen, verteilt angeordnet sind.

Die Moleküle 17a, 17b, 17c sind unpolar oder überwiegend unpolar ausgebildet. Es handelt sich um amphipile Moleküle, die eine HydroxyGruppe aufweisen. Sie sind darüber hinaus migrationsfähig, und können über große Zeiträume - insbesondere aufgrund stochastischer Bewegung richtungsunabhängig - also isotrop - durch die PMMA-Schicht 13 migrieren oder wandern.

Einige der Moleküle 17 - nämlich die in Fig. 3 mit 17a, 17b und 17c bezeichneten Moleküle - können zur Oberfläche 15 gelangen.

Fig. 5 zeigt in einer stark vergrößerten Detailansicht - gleichermaßen schematisch - die Struktur der Oberfläche 15 der PMMA-Schicht 13. Hier wird deutlich, dass einige der zur Oberfläche 15 hin migrierten Moleküle, nämlich ausweislich Fig. 5 die Moleküle 17d und 17e, die Oberflächenstruktur der Oberfläche 15 teilweise verändert oder beeinflusst haben.

Bereits ohne Änderung der Oberflächenstruktur, allein durch das nahe Herantreten der Moleküle 17 an die Oberfläche 15 aus dem Inneren der PMMA-Schicht 13 heraus, kann die Oberflächenspannung der Oberfläche 15 reduziert werden. Einige Moleküle - nämlich ausweislich Fig. 5 die Moleküle 17d und 17e, sowie weitere, in Fig. 5 nicht bezeichnete Moleküle - können darüber hinaus auch die Oberflächenstruktur ändern.

Erreicht wird auf diese Weise eine leicht zu reinigende bzw. in gewissem Maße auch selbstreinigende Oberfläche, und zwar sowohl durch die erreichten Strukturänderungen als auch durch die Reduktion der Oberflächenspannungen in der Oberfläche 15.

Schmutzpartikel können - anders als bei dem Schichtaufbau des Standes der Technik gemäß Fig. 2 - an einer hydrophob ausgestalteten Oberfläche 15 aufgrund reduzierter Adhäsionskräfte nicht mehr so gut anhaften. Sie werden spätestens dann, wenn die Oberfläche 15 mit Wasser beaufschlagt wird, weggespült, da die Adhäsionskräfte nur noch äußerst gering sind, und sich die Schmutzpartikel 16 insoweit nicht mehr an der Oberfläche 15 anhaften können.

Ausweislich Fig. 4 wird ein Ausführungsbeispiel dargestellt, bei dem anstelle des Schichtaufbaus der Fig. 2 und 3 ein erfindungsgemäßes Ausführungsbeispiel nur eine einzige Kunststoffschicht mit einer größeren Wandstärke W3 umfasst. Die Wandstärke W3 kann etwa der Summe der Wandstärken W1 der PMMA-Schicht und W2 der ABS-Schicht entsprechen.

Das Ausführungsbeispiel der Fig. 6 zeigt, dass ein erfindungsgemäßes Bauelement 10 auch einen Schichtverbund umfassen kann, bei dem eine PMMA-Schicht 13 oder eine Schichtenverbundkonstruktion von zwei oder mehreren Schichten 13, 14 aus unterschiedlichen Kunststoffen, auf derjenigen Seite, die der Oberfläche 15 abgewandt ist, von einer aushärtbaren Schaum- oder Vergussmasse, insbesondere einer Polyurethan-Schaummasse 18, die weiter insbesondere mit Verstärkungsfasern, insbesondere mit Glasfasern 19a, 19b, 19c versetzt ist, hinterschäumt werden kann. Hierdurch können leichtbauende, biegesteife und formsteife Bauelemente 10 gefertigt werden.

Im folgenden soll anhand einer Tabelle für eine Vielzahl von Stoffen mit jeweils unterschiedlichen Gewichtskonzentrationen der Stoffe, bezogen auf eine PMMA-Schicht, jeweils unter Anführung der Messungen nach Zeitabläufen von 0 und 6 Monaten die Oberflächenspannungen, jeweils angegeben in mN/m, dargelegt werden.

| Additiv | 0 Monate | | 6 Monate | |
|---|---|---|---|---|
| | 1 Gew% | 5 Gew% | 1 Gew% | 5 Gew% |
| Stearinsäure, Zn-Salz | 30,1 | | | |
| Palmitinsäure | 37,4 | 32,4 | 36,92 | 29,88 |
| Stearinsäurem ethylester | 41,5 | 33,3 | 39,65 | 37,03 |
| Caprinsäure | 41,7 | 37,8 | 41,18 | 42,93 |
| Caprinsäuremethylester | 43,3 | 41,1 | 41,79 | 47,38 |
| Palmitinsäuremethylester | 42,4 | 41,4 | 41,34 | 44,05 |
| t-Butyl-Methacrylat | 45 | 42,5 | 38,95 | 36,11 |
| Zinkpalmitat | 41,9 | 42,44 | | |
| Zinkcaprinat | 36,23 | | | |
| Laurylacrylat | 39,52 | 37,55 | 42,04 | 35,92 |
| Tegomer P121 | 30,3 | | 30,18 | |
| Cerafak 106 | 36,4 | 34 | 31,6 | 36,22 |
| Licolub WE 40 | 34,5 | | 37,79 | |
| Ceracol 609N | 42 | | 38,23 | |
| Cerafak 103 | 38,5 | 51,1 | 36,19 | 39,74 |
| Luwax AF29 | 44,7 | 40,8 | 41,63 | 44,52 |
| Cerafak 110 | 51,6 | 44,5 | 38,88 | 40,12 |
| Ceraflour 994 | 55,1 | | 41,96 | |
| Luwax E | 39,55 | 39,06 | 39,88 | 46,74 |
| Luwax V | 43,15 | 44,38 | 41,83 | 43,92 |
| Deuteron OG 8650 | 45,7 | | 39,69 | |
| Perfluoroctan | 41,2 | 41,8 | 44,05 | 37,83 |
| Cerafluor 998 | 36,8 | | 36,61 | |
| Teflonpulver | 46,2 | | 42,99 | |
| PFA 6910GZ | 47,06 | | 41,65 | |
| FEP 6300GZ | 45,15 | | 46,92 | |
| Trimethoxyoctadecylsilan | 41,8 | | 35 | |
| Dynasylan OCTEO | 40,2 | 40,4 | 38,2 | 33,92 |
| H-Si 6440P | 36,4 | | 30,67 | |
| Tegopren 6846 | 45,65 | 41,47 | | |
| Silclean 3700 | | 25,7 | | 25,39 |
| Tego Phobe 1650 | 32,2 | | 24,88 | |
| Tego Phobe 6010 | 37 | 38,3 | 32,22 | 24,34 |

Die Versuchsreihen erfolgten durch Einarbeitung der in der Tabelle aufgeführten Additive in der in der Tabelle angegebenen Konzentration durch eine Eincompoundierung in eine PMMA-Masse. Die Probekörper wurden mittels Spritzguss hergestellt. Die erhaltenen Probekörper wurden jeweils optisch beurteilt, und die freie Oberflächenenergie (Oberflächenspannung) wurde mittels herkömmlicher Kontaktwinkelmessungen bestimmt.

Der Referenzkörper bestand aus reinem PMMA, welches mit einem Extruder der Firma Mitras verarbeitet wurde. An dem Probekörper wurde eine Oberflächenenergie von 43,28 mN/m gemessen.

Gemessen wurden die freien Oberflächenenergien nach 0, 2, 4 und 6 Monaten, wobei in der oben angegebenen Tabelle nur die Messwerte nach 0 Monaten und nach 6 Monaten aufgeführt sind.

Die verwendeten Moleküle umfassten insbesondere niedermolekulare Kohlenwasserstoffe, oligomere Kohlenwasserstoffe, oligomere Perfluorverbindungen, oligomere silikonartige Verbindungen, polymere silikonartige Verbindungen.

Bei nahezu allen untersuchten Molekülen trat allenfalls eine geringfügige Veränderung der optischen Eigenschaften der Oberfläche auf.

Schließlich kann ausweislich obiger Tabelle ersehen werden, dass Oberflächenspannungen von deutlich weniger als 40 mN/m, ob bei unterschiedlichen Konzentrationen und unterschiedlichen Molekülen, erreicht werden konnten.

Aus Gründen der Einfachheit - und weil es dem Verständnis des Fachmanns entspricht - wurde in dem Text durchgehend die Abkürzung PMMA für den Stoff Polymethylmethacrylat verwendet, sowie die Abkürzung ASA für Acrylester-Styrol-Acrylnitril, und die Bezeichnung TPU für thermoplastisches Polyurethan, verwendet.

Anhand der Ausführungsbeispiele in den Zeichnungen wurden Bauelemente 10 mit einer PMMA-Schicht beschrieben. Diese PMMA-Schicht oder der beschriebene Schichtaufbau, der eine PMMA-Schicht aufweist, steht exemplarisch für eine Vielzahl von nicht dargestellten Ausführungsbeispielen, die andere UV-beständige Kunststoffschichten bereitstellen. Insbesondere bezieht sich die Erfindung auf Bauelemente, die eine UV-beständige Deckschicht aus einem geeigneten Kunststoff, wie PMMA, oder ASA aufweisen.

## Patentansprüche

1. Bauelement (10), insbesondere für Außenanwendungen, umfassend eine Kunststoffschicht (13) aus einem UV-beständigen Kunststoff, zum Beispiel aus PMMA oder ASA, mit wenigstens einer, im Montagezustand des Bauelementes einer Beaufschlagung durch Wasser oder Wasserdampf und/oder Schmutzpartikeln ausgesetzten Oberfläche (15), **dadurch gekennzeichnet, dass** in der Kunststoffschicht, zur Reduktion der Oberflächenspannung an der Oberfläche, als Additiv ein Reservoir an migrationsfähigen, unpolaren oder überwiegend unpolaren Molekülen (17a, 17b, 17c) angeordnet ist.

2. Bauelement (10) nach Anspruch 1, **dadurch gekennzeichnet, dass** die Moleküle in Folge eines sich über einen großen Zeitraum erstreckenden, insbesondere sich zumindest über einen überwiegenden Teil der zu erwartenden Lebensdauer des Bauelementes erstreckenden Migrationsvorganges, hin zu der Oberfläche, eine Reduktion der Oberflächenspannung aufrechterhalten.

3. Bauelement nach Anspruch 1 oder 2, **dadurch gekennzeichnet, dass** die Moleküle amphiphil ausgebildet sind.

4. Bauelement nach einem der Ansprüche 1 bis 3, **dadurch gekennzeichnet, dass** die Moleküle aus der Gruppe der folgenden Stoffe stammen oder wenigstens einen Stoff mit der funktionellen Gruppe der folgenden Stoffe aufweisen: a) Silikone, b) Wachse, c) Fluor-Verbindungen.

5. Bauelement nach einem der vorangegangenen Ansprüche, **dadurch gekennzeichnet, dass** das Bauelement (10) flächenhaft ausgebildet ist.

6. Bauelement nach einem der vorangegangenen Ansprüche, **dadurch gekennzeichnet, dass** das Bauelement einen Schichtverbund aus mehreren Schichten (13, 14) aus unterschiedlichen Kunststoffen aufweist.

7. Bauelement nach einem der vorangegangenen Ansprüche, **dadurch gekennzeichnet, dass** die Kunststoffschicht von einer Folie (13), insbesondere einer tiefziehbaren Folie, oder von einer tiefgezogenen Folie, oder von einer Platte bereitgestellt ist.

8. Bauelement nach Anspruch 7, **dadurch gekennzeichnet, dass** die Folie oder Platte hinterschäumt ist, insbesondere von einer Polyurethan-Schaummasse (18), weiter insbesondere unter Zusatz von Verstärkungsfasern (19a, 19b, 19c), hinterschäumt ist.

9. Bauelement nach einem der vorangegangenen Ansprüche, **dadurch gekennzeichnet, dass** das Additiv in eine Schmelze der Kunststoffschicht aus PMMA oder ASA eingebracht oder eingearbeitet worden ist, insbesondere mittels eines Extrusionsvorganges, eingearbeitet worden ist.

10. Bauelement nach einem der vorangegangenen Ansprüche, **dadurch gekennzeichnet, dass** die Moleküle die Oberflächenspannung der Oberfläche auf einen Wert kleiner als 40 mN/m, insbesondere kleiner als 35 mN/m, weiter insbesondere kleiner als 30 mN/m, weiter insbesondere kleiner als 25 mN/m, weiter insbesondere kleiner als 20 mN/m, reduzieren.

11. Bauelement nach einem der vorangegangenen Ansprüchen, **dadurch gekennzeichnet, dass** das Bauelement als Sanitärausstattungsteil, insbesondere als Duschkabinentür, ausgebildet ist.

12. Bauelement nach einem der Ansprüche 1 bis 10, **dadurch gekennzeichnet, dass** das Bauelement als Fahrzeugteil (10), insbesondere als Fahrzeug-Scheinwerfer oder -Rückleuchte oder als Verkleidungsteil für landwirtschaftliche Fahrzeuge oder Baustellenfahrzeuge oder als Karosserieteil oder Verkleidungsteil für einen Caravan-Anhänger oder für ein Wohnmobil, z. B. als Heckschürze eines Caravan-Anhängers, ausgebildet ist.

13. Verfahren zur Herstellung eines Bauelementes (10), insbesondere eines Bauelementes nach einem der vorangegangenen Ansprüche, insbesondere für Außenanwendungen, wobei das Bauelement im hergestellten Zustand eine Kunststoffschicht (13) aus PMMA oder ASA, mit wenigstens einer, im Montagezustand des Bauelementes einer Beaufschlagung durch Wasser oder Wasserdampf und/oder Schmutzpartikeln ausgesetzten Oberfläche (15) aufweist, **gekennzeichnet durch** die folgenden Schritte:
a) Bereitstellen einer Kunststoffschmelze aus PMMA oder ASA,
b) Einbringen von Additiven in die Kunststoffschmelze, zur Bereitstellung eines Reservoirs an migrationsfähigen, unpolaren oder überwiegend unpolaren Molekülen (17a, 17b, 17c), die die Oberflächenspannung an der Oberfläche (15) im hergestellten Zustand senken und eine Reduktion der Oberflächenspannung langfristig aufrechterhalten,
c) Bearbeiten der um die Additive bereicherten, gegebenenfalls ausgehärteten Kunststoffschmelze, durch Umformen, wie Tiefziehen oder Spritzgiessen, zur Erzielung einer Raumform des Bauelementes.

14. Spritzfähiges Material, enthaltend oder bestehend aus PMMA, insbesondere zur Verwendung als Farbe, Lack oder Klebstoff, umfassend ein Reservoir an migrationsfähigen, unpolaren oder überwiegend unpolaren Molekülen zur Reduktion der Oberflächenspannung an einer nach Verwendung des Materials ausgebildeten, eine Oberfläche bereitstellenden Grenzfläche.

15. Bauelement (10), insbesondere für Außenanwendungen, umfassend eine Kunststoffschicht (13) aus PMMA oder ASA, mit wenigstens einer im Montagezustand des Bauelementes einer Beaufschlagung durch Wasser oder Wasserdampf und/oder Schmutzpartikeln Oberfläche (15), **dadurch gekennzeichnet, dass** die Oberfläche (15) der Kunststoffschicht (13) infolge einer Anreicherung der Kunststoffschicht mit migrationsfähigen, unpolaren oder überwiegend unpolaren Molekülen eine Oberflächenspannung von weniger als 40 mN/m, insbesondere weniger als 35 mN/m, weiter insbesondere weniger als 30 mN/m, aufweist.

## Claims

1. Component (10), in particular for outdoor applications, comprising a plastic layer (13) made from a UV-resistant plastic, for example from PMMA or ASA, having at least one surface (15) that is subjected to exposure to water or water vapour and/or dirt particles when the component is in the mounted state, **characterised in that** a reservoir of non-polar or predominantly non-polar molecules (17a, 17b, 17c) capable of migration is disposed in the plastic layer as an additive in order to reduce surface tension on the surface.

2. Component (10) as claimed in claim 1, **characterised in that** the molecules maintain a reduction in surface tension due to a process of migration through to the surface extending over a long period of time, in particular extending over at least a predominant part of the anticipated service life of the component.

3. Component as claimed in claim 1 or 2, **characterised in that** the molecules are of the amphiphilic type.

4. Component as claimed in one of claims 1 to 3, **characterised in that** the molecules originate from the group comprising the following substances or have at least one substance comprising the functional group of the following substances: a) silicones, b) waxes, c) fluorine compounds.

5. Component as claimed in one of the preceding claims, **characterised in that** the component (10) has an extensive two-dimensional surface.

6. Component as claimed in one of the preceding claims, **characterised in that** the component has a layered composite structure of several layers (13, 14) of different plastics.

7. Component as claimed in one of the preceding claims, **characterised in that** the plastic layer is provided in the form of a film (13), in particular a deep-drawable film, or a deep-drawn film or a plate.

8. Component as claimed in claim 7, **characterised in that** the film or plate is provided with a foamed backing, in particular of a polyurethane foam compound (18), more particularly having added reinforcing fibres (19a, 19b, 19c) .

9. Component as claimed in one of the preceding claims, **characterised in that** the additive is introduced into or incorporated in a melt of the plastic layer of PMMA or ASA, in particular is incorporated by means of an extrusion process.

10. Component as claimed in one of the preceding claims, **characterised in that** the molecules reduce the surface tension of the surface to a value of less than 40 mN/m, in particular less than 35 mN/m, more particularly less than 30 mN/m, more particularly less than 25 mN/m, more particularly less than 20 mN/m.

11. Component as claimed in one of the preceding claims, **characterised in that** the component is part of a sanitary facility, in particular a shower cubicle door.

12. Component as claimed in one of claims 1 to 10, **characterised in that** the component is a vehicle part (10), in particular a vehicle headlight or rear light, or a trim part for agricultural vehicles or construction site vehicles, or a body part or trim part for a trailer caravan or for a camper van, e.g. a rear apron of a trailer caravan.

13. Method for producing a component (10), in particular a component as claimed in one of the preceding claims, in particular for outdoor applications, whereby the component in the finished state has a plastic layer (13) of PMMA or ASA having at least one surface (15) that is subjected to exposure to water or water vapour and/or dirt particles when the component is in the mounted state, **characterised by** the following steps:
a) providing a plastic melt of PMMA or ASA,
b) introducing additives to the plastic melt in order to provide a reservoir of non-polar or predominantly non-polar molecules (17a, 17b, 17c) capable of migration which lower the surface tension on the surface (15) in the finished state and maintain a reduction in surface tension in the long term,
c) processing the optionally cured plastic melt incorporating the additives by forming, such as deep drawing or injection moulding, to produce a three-dimensional shape of the component.

14. Sprayable material containing or consisting of PMMA, in particular for use as a paint, lacquer or adhesive, comprising a reservoir of non-polar or predominantly non-polar molecules capable of migration in order to reduce the surface tension on an interface constituting a surface formed when using the material.

15. Component (10), in particular for outdoor applications, comprising a plastic layer (13) made from PMMA or ASA, having at least one surface (15) that is subjected to exposure to water or water vapour and/or dirt particles when the component is in the mounted state, **characterised in that** the surface (15) of the plastic layer (13) has a surface tension of less than 40 mN/m, in particular less than 35 mN/m, more particularly less than 30 mN/m, due to the addition to the plastic layer of non-polar or predominantly non-polar molecules capable of migration.

## Revendications

1. Composant (10), en particulier pour des applications extérieures, comprenant une couche de matière plastique (13) constituée d'une matière plastique résistante aux UV, par exemple de PMMA ou ASA, ayant, le composant à l'état de montage, au moins une surface (15) exposée à l'eau ou à la vapeur d'eau et/ou à des particules de saletés, **caractérisé en ce que** dans la couche de matière plastique afin de réduire la tension superficielle à la surface, sous forme d'un additif, il est disposé un réservoir de molécules (17a, 17b, 17c) non-polaires ou majoritairement non-polaires, aptes à la migration.

2. Composant (10) selon la revendication 1, **caractérisé en ce que** les molécules maintiennent une réduction de la tension superficielle, suite à une opération de migration s'étendant sur une longue durée, en particulier s'étendant au moins sur une majeure partie de la durée de vie à attendre du composant, vers la surface.

3. Composant selon la revendication 1 ou 2, **caractérisé en ce que** les molécules sont réalisées amphiphiles.

4. Composant selon l'une des revendications 1 à 3, **caractérisé en ce que** les molécules sont issues du groupe des matières suivantes ou comportent au moins une matière avec le groupe fonctionnel des matières suivantes : a) silicone, b) cire c) composés fluorés.

5. Composant selon l'une des précédentes revendications, **caractérisé en ce que** le composant (10) est réalisé en forme de face.

6. Composant selon l'une des précédentes revendications, **caractérisé en ce que** le composant comporte un composite de couches constitué de plusieurs couches (13, 14) de différentes matières plastiques.

7. Composant selon l'une des précédentes revendications, **caractérisé en ce que** la couche de matière plastique est fournie par un film (13), en particulier un film emboutissable, ou un film embouti ou une plaque.

8. Composant selon la revendication 7, **caractérisé en ce que** le film ou la plaque est rembourré(e) de mousse, en particulier est rembourré(e) de mousse d'une masse de mousse en polyuréthane (18), en outre, notamment, en ajoutant des fibres de renforcement (19a, 19b, 19c).

9. Composant selon l'une des précédentes revendications, **caractérisé en ce que** l'additif a été appliqué ou incorporé dans une masse fondue de la couche de matière plastique de PMMA ou ASA, en particulier, incorporé au moyen d'une opération d'extrusion.

10. Composant selon l'une des précédentes revendications, **caractérisé en ce que** les molécules réduisent la tension superficielle de la surface à une valeur inférieure à 40 mN/m, en particulier inférieure à 35 mN/m, en outre notamment inférieure à 25 mN/m, en outre notamment inférieure à 20 mN/m.

11. Composant selon l'une des précédentes revendications, **caractérisé en ce que** le composant est réalisé en tant qu'élément d'équipement sanitaire, en particulier en tant que porte de cabine de douche.

12. Composant selon l'une des revendications 1 à 10, **caractérisé en ce que** le composant est réalisé en tant que pièce d'automobile (10), en particulier en tant que phare ou feu arrière d'automobile ou en tant qu'élément de revêtement pour des véhicules agricoles ou des véhicules de chantier ou en tant qu'élément de carrosserie ou élément de revêtement pour une remorque-caravane ou pour un mobile-home, par exemple en tant que tablier arrière d'une remorque-caravane.

13. Procédé pour la fabrication d'un composant (10), en particulier d'un composant selon d'une des précédentes revendications, en particulier pour des applications extérieures, le composant comprenant, fabriqué, une couche de matière plastique (13) de PMMA ou ASA, ayant au moins, le composant à l'état de montage, une surface (15) exposée à l'eau ou à la vapeur d'eau et/ou à des particules de saletés, **caractérisé par** les étapes suivantes :
a) mise à disposition d'une masse fondue en matière plastique en PMMA ou ASA,
b) incorporation d'additifs dans la masse fondue en matière plastique, pour mise à disposition d'un réservoir de molécules (17a, 17b, 17c) non-polaires ou majoritairement non-polaires, aptes à la migration qui réduisent la tension superficielle à la surface (15), à l'état fabriqué, et maintiennent longtemps une réduction de la tension superficielle,
c) traitement de la masse fondue en matière plastique, enrichie des additifs, le cas échéant durcie, par formage, comme l'emboutissage ou moulage par injection, pour obtention d'une forme spatiale du composant.

14. Matériau apte au moulage par injection, contenant ou composé de PMMA, en particulier pour utilisation en tant que peinture, vernis ou adhésif, comprenant un réservoir de molécules non-polaires ou majoritairement non-polaires, aptes à la migration, pour réduction de la tension superficielle au niveau d'une face de délimitation mettant à disposition une surface, réalisée après utilisation du matériau.

15. Composant (10), en particulier pour des applications extérieures, comprenant une couche de matière plastique (13) en PMMA ou ASA, ayant, le composant à l'état de montage, au moins une surface (15) exposée à l'eau ou à la vapeur d'eau et/ou à des particules de saletés, **caractérisé en ce que** la surface (15) de la couche de matière plastique (13) comporte suite à un enrichissement de la couche de matière plastique avec des molécules non-polaires ou majoritairement non-polaires, aptes à la migration, une tension superficielle inférieure à 40 mN/m, en particulier, inférieure à 35 mN/m, en outre notamment inférieure à 30 mN/m.
